(19)

Europäisches
Patentamt
European
Patent Office
Office européen
des brevets

(11)     **EP 4 299 635 B1**

(12)         **EUROPEAN PATENT SPECIFICATION**

(45) Date of publication and mention
of the grant of the patent:
**08.04.2026 Bulletin 2026/15**

(51) International Patent Classification (IPC):
**C08F 214/26** *(2006.01)*     **C08J 5/18** *(2006.01)*
**H01B 3/44** *(2006.01)*     **C09D 127/18** *(2006.01)*

(21) Application number: **22759857.0**

(22) Date of filing: **28.02.2022**

(52) Cooperative Patent Classification (CPC):
(C-Sets available)
**C08F 214/262; C08J 5/18; C09D 127/18;
H01B 3/445;** C08J 2327/18        (Cont.)

(86) International application number:
**PCT/JP2022/008440**

(87) International publication number:
**WO 2022/181824 (01.09.2022 Gazette 2022/35)**

(54) **FLUORINE-CONTAINING COPOLYMER**

FLUORHALTIGES COPOLYMER

COPOLYMÈRE FLUORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021 JP 2021031101**

(43) Date of publication of application:
**03.01.2024 Bulletin 2024/01**

(73) Proprietor: **Daikin Industries, Ltd.
Osaka-shi, Osaka 530-0001 (JP)**

(72) Inventors:
• **ISAKA, Tadaharu
Osaka-shi, Osaka 530-0001 (JP)**

• **YAMAMOTO, Yukari
Osaka-shi, Osaka 530-0001 (JP)**
• **ZENKE, Yumi
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
**EP-A1- 1 260 526        WO-A1-03/006566
WO-A1-2019/008998      WO-A1-2021/054364
JP-A- 2014 028 953      JP-A- 2015 054 431
JP-A- 2015 054 431**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 299 635 B1

(52) Cooperative Patent Classification (CPC): (Cont.)

C-Sets
**C08F 214/262, C08F 214/28, C08F 216/1408**

**Description**

TECHNICAL FIELD

The present invention relates to a fluorine-containing copolymer.

BACKGROUND ART

JP-A-52-109588 describes a terpolymer containing (a) tetrafluoroethylene, (b) hexafluoropropylene in an amount of 4-12 wt.% based on the weight of the terpolymer, and (c) perfluoro(ethyl vinyl ether) or perfluoro(n-propyl vinyl ether) in an amount of 0.5-3 wt.% based on the weight of the terpolymer, in a copolymerized form.
EP-A-1 260 526 discloses a fluorine-containing polymer comprising 70-95 wt.% of TFE, 5-25 wt.% of HFP and 0-20 wt.% of PAVE, and having a melt flow rate (MFR) at 372°C according to ASTM D2116 of 0.1-100 g/10 min.
WO 2019/008998 relates to an electric wire comprising a conductor, a first insulation layer formed on the outer periphery of the conductor, and a second insulation layer formed on the outer periphery of the first insulation layer, wherein the first and the second insulation layers comprising a melt-processable TFE/HFP copolymer.
JP-A-2015-054431 describes a laminated tube comprising at least three layers including a layer (a) comprising an aliphatic polyamide (A), a layer (b) comprising a semi-aromatic polyamide (B) composed of diamine units containing $\geq$ 60 mol% of xylylenediamine unit and/or a bis(aminomethyl)naphthalene units and dicarboxylic acid units containing $\geq$ 60 mol% of aliphatic $C_{8-13}$-dicarboxylic acid units, and a layer (c) comprising a fluorine-containing polymer (C) having a specified MFR and having a functional group reactive with amino groups introduced into the molecular chain.

SUMMARY OF THE INVENTION

PROBLEM TO BE SOLVED BY THE INVENTION

An object of the present invention is to provide a fluorine-containing copolymer which can form a very thick coating layer in a uniform thickness on a core wire having a very large diameter, can be formed into a beautiful tube and can easily be formed into a film uniform in thickness, and can give a formed article excellent in abrasion resistance, low air permeation, 75°C high-temperature rigidity, 150°C tensile creep resistance and durability to repeated loads.

MEANS FOR SOLVING THE PROBLEM

The present invention provides a fluorine-containing copolymer (also referred to as "the present copolymer" hereinafter) comprising tetrafluoroethylene (TFE) units and, based on the total of monomer units, 7.6-10.3 mass% of hexafluoropropylene (HFP) units and 1.3-2.9 mass% of perfluoro(propyl vinyl ether) (PPVE) units, and which has a melt flow rate at 372°C of 0.7-4.5 g/10, determined according to the method defined later herein.
Also, the present invention provides an extrusion formed article or a transfer molded article comprising the present copolymer.
Furthermore, the present invention provides a coated electric wire comprising a coating layer comprising the present copolymer.
Yet further, the present invention provides a formed article which comprises the present copolymer, and is a tube, a film or an electric wire coating.

EFFECT OF INVENTION

According to the present invention, there can be provided a fluorine-containing copolymer which can form a very thick coating layer in a uniform thickness on a core wire having a very large diameter, can be formed into a beautiful tube and can easily be formed into a film uniform in thickness, and can give a formed article excellent in abrasion resistance, low air permeation, 75°C high-temperature rigidity, 150°C tensile creep resistance and durability to repeated loads.

DESCRIPTION OF EMBODIMENTS

Hereinafter, specific embodiments of the present invention will be described in detail.
The present copolymer comprises tetrafluoroethylene (TFE) units, hexafluoropropylene (HFP) units and perfluoro(propyl vinyl ether) (PPVE) units.
As fluororesins, non melt-processable fluororesins such as polytetrafluoroethylene (PTFE), and melt-fabricable fluororesins are known. PTFE, though having excellent properties, has such a drawback that the melt processing is remarkably difficult. Meanwhile, as the melt-fabricable fluororesins, **e.g.** TFE/HFP copolymers (FEP) and TFE/PPVE copolymers (PFA) are known; however, these have a drawback of being inferior in the heat resistance to PTFE. Then, JP-A-52-109588 proposes the above-mentioned terpolymer as a fluorocarbon polymer improved in these drawbacks.

However, a fluorine-containing copolymer better in the transparency than conventional fluorine-containing copolymers like the terpolymer described in JP-A-52-109588 is demanded. In particular, chemical solution piping requires high transparency so that the state of the chemical solution in the chemical solution piping can be visually observed. Additionally, the chemical solution piping also requires abrasion resistance, low air permeation, high-temperature rigidity, high-temperature tensile creep resistance and durability to repeated loads. Moreover, for the fluorine-containing copolymer constituting the chemical solution piping, high moldability of being capable of formed into tubes having uniform thicknesses is also demanded.

It has been found that by regulating the contents of HFP unit and PPVE unit of the fluorine-containing copolymer containing TFE unit, HFP unit and PPVE unit and the melt flow rate in very limited ranges, the moldability of the fluorine-containing copolymer is improved and formed articles excellent in abrasion resistance, low air permeation, 75°C high-temperature rigidity, 150°C tensile creep resistance and durability to repeated loads can be obtained.

Moreover, by forming the present copolymer by an extrusion forming method, a very thick coating layer can be formed in a uniform thickness on a core wire very large in diameter, and a beautiful tube can be obtained, and the copolymer can easily be formed into a film uniform in thickness. Thus, the present copolymer can be utilized not only as a material for tubes, but also can be utilized in the broad applications such as electric wire coatings and films.

The present copolymer is a melt-fabricable fluororesin. Being melt-fabricable means that a polymer can be melted and processed by using a conventional processing device such as an extruder.

The content of the HFP unit of the present copolymer is, with respect to the whole of the monomer units, 7.6-10.3 mass%, and preferably 7.7 mass% or higher, more preferably 7.8 mass% or higher, still more preferably 7.9 mass% or higher, especially preferably 8.0 mass% or higher and most preferably 8.1 mass% or higher, and preferably 10.2 mass% or lower, more preferably 10.1 mass% or lower, still more preferably 10.0 mass% or lower, further still more preferably 9.9 mass% or lower, further still more preferably 9.8 mass% or lower, especially preferably 9.3 mass% or lower and most preferably 9.0 mass% or lower. When the content of the HFP unit is too high, there cannot be obtained formed articles excellent in 75°C high-temperature rigidity, 150°C tensile creep resistance and durability to repeated loads; and when the content of the HFP unit is too low, there cannot be obtained formed articles excellent in abrasion resistance, and there cannot be obtained formed articles exhibiting excellent transparency.

The content of the PPVE unit of the present copolymer is, with respect to the whole of the monomer units, 1.3-2.9 mass%, and preferably 1.4 mass% or higher, more preferably 1.5 mass% or higher, still more preferably 1.6 mass% or higher, especially preferably 1.7 mass% or higher and most preferably 1.8 mass% or higher, and preferably 2.8 mass% or lower, more preferably 2.7 mass% or lower, still more preferably 2.6 mass% or lower, further still more preferably 2.5 mass% or lower, especially preferably 2.4 mass% or lower and most preferably 2.0 mass% or lower. Due to that the content of the PPVE unit is in the above range, formed articles obtained from the present copolymer become ones excellent in transparency, abrasion resistance, low air permeation, 75°C high-temperature rigidity, 150°C tensile creep resistance and durability to repeated loads. When the content of the PPVE unit is too low, there cannot be obtained formed articles excellent in abrasion resistance, and there cannot be obtained formed articles exhibiting excellent transparency.

The content of the TFE unit of the present copolymer is, with respect to the whole of the monomer units, preferably 86.8-91.1 mass%, more preferably 87.0 mass% or higher, still more preferably 87.2 mass% or higher, further still more preferably 87.3 mass% or higher, especially preferably 87.8 mass% or higher and most preferably 88.0 mass% or higher, and more preferably 90.8 mass% or lower, still more preferably 90.6 mass% or lower, further still more preferably 90.4 mass% or lower and especially preferably 90.2 mass% or lower. The content of the TFE unit may be selected so that there becomes 100 mass%, the total of contents of the HFP unit, the PPVE unit, the TFE unit and other monomer units.

The present copolymer is not limited as long as the copolymer contains the above three monomer units, and may be a copolymer containing only the above three monomer units, or may be a copolymer containing the above three monomer units and other monomer units.

The other monomers are not limited as long as being copolymerizable with TFE, HFP and PPVE, and may be fluoromonomers or fluorine-non-containing monomers.

It is preferable that the fluoromonomer is at least one selected from the group consisting of chlorotrifluoroethylene, vinyl fluoride, vinylidene fluoride, trifluoroethylene, hexafluoroisobutylene, monomers represented by $CH_2=CZ^1(CF_2)_nZ^2$ (wherein $Z^1$ is H or F, $Z^2$ is H, F or Cl, and n is an integer of 1-10), perfluoro(alkyl vinyl ether)s [PAVE] represented by $CF_2=CF-ORf^1$ (wherein $Rf^1$ is $C_{1-8}$-perfluoroalkyl) (here, excluding PPVE), alkyl perfluorovinyl ether derivatives represented by $CF_2=CF-O-CH_2-Rf^2$ (wherein $Rf^2$ is $C_{1-5}$-perfluoroalkyl), perfluoro-2,2-dimethyl- 1,3-dioxol [PDD], and perfluoro-2-methylene-4-methyl-1,3-dioxolane [PMD].

The monomers represented by $CH_2=CZ^1(CF_2)_nZ^2$ include $CH_2=CFCF_3$, $CH_2=CH-C_4F_9$, $CH_2=CH-C_6F_{13}$, and $CH_2=CF-C_3F_6H$.

The perfluoro(alkyl vinyl ether)s represented by $CF_2=CF-ORf^1$ include $CF_2=CF-OCF_3$ and $CF_2=CF-OCF_2CF_3$.

The fluorine-non-containing monomers include hydrocarbon-based monomers copolymerizable with TFE, HFP and PPVE. Examples of the hydrocarbon-based monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, n-vinyl butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-non-containing monomers may also be functional group-containing hydrocarbon-based monomers copolymerizable with TFE, HFP and PPVE. Examples of the functional group-containing hydrocarbon-based monomers include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-non-containing monomers having a glycidyl group, such as glycidyl vinyl ether and glycidyl allyl ether; fluorine-non-containing monomers having an amino group, such as aminoalkyl vinyl ethers and aminoalkyl allyl ethers; fluorine-non-containing monomers having an amido group, such as (meth)acrylamide and methylolacrylamide; bromine-containing olefins, iodine-containing olefins, bromine-containing vinyl ethers, and iodine-containing vinyl ethers; and fluorine-non-containing monomers having a nitrile group.

The content of the other monomer units in the present copolymer is, with respect to the whole of the monomer units, preferably 0-4.3 mass%, and more preferably 1.0 mass% or lower, still more preferably 0.5 mass% or lower and especially preferably 0.1 mass% or lower.

The melt flow rate (MFR) of the present copolymer is 0.7 g/10 min to < 4.5 g/10 min, and preferably 0.9 g/10 min or higher, more preferably 1.0 g/10 min or higher, still more preferably 1.5 g/10 min or higher, further still more preferably 2.0 g/10 min or higher, further still more preferably 2.5 g/10 min or higher, especially preferably 2.7 g/10 min or higher and most preferably 3.0 g/10 min or higher, and preferably 4.4 g/10 min or lower, more preferably 4.0 g/10 min or lower, still more preferably 3.5 g/10 min or lower, especially preferably 3.3 g/10 min or lower and most preferably 3.0 g/10 min or lower. Due to that the MFR of the present copolymer is in the above range, the moldability of the copolymer is improved and formed articles excellent in transparency, abrasion resistance, low air permeation, 150°C tensile creep resistance and durability to repeated loads can be obtained. When the MFR is too high, there cannot be obtained formed articles excellent in transparency, abrasion resistance and 150°C tensile creep resistance. When the MFR is too low, there cannot be obtained formed articles excellent in low air permeation and 75°C high-temperature rigidity.

Herein, the MFR is a value obtained as a mass (g/10 min) of a polymer flowing out from a die of 2 mm in inner diameter and 8 mm in length per 10 min at 372°C under a load of 5 kg using a melt indexer G-01 (manufactured by Toyo Seiki Seisaku-sho Ltd.), according to ASTM D1238.

The MFR can be regulated by e.g. regulating the kind and amount of a polymerization initiator to be used in polymerization of monomers, and the kind and amount of a chain transfer agent.

The present copolymer may or may not have functional groups. The functional groups are functional groups present on the main chain terminals or side chain terminals of the present copolymer, and functional groups present on the main chain or side chains thereof. Typical functional groups are - $CF=CF_2$, $-CF_2H$, -COF, -COOH, $-COOCH_3$, $-CONH_2$ and $-CH_2OH$.

The number of functional groups per $10^6$ main-chain carbon atoms of the present copolymer is preferably 50 or less, more preferably 40 or less, still more preferably 30 or less, especially preferably 20 or less and most preferably less than 15. Due to that the number of functional groups of the present copolymer is in the above range, formed articles hardly making fluorine ions to dissolve out in chemical solutions such as a hydrogen peroxide aqueous solution can be obtained.

The number of functional groups of the present copolymer is the total number of $-CF=CF_2$, $-CF_2H$, -COF, -COOH, - $COOCH_3$, $-CONH_2$ and $-CH_2OH$.

The number of $-CF_2H$ per $10^6$ main-chain carbon atoms of the present copolymer is preferably 30 or less, more preferably 20 or less and still more preferably 10 or less.

The total number, per $10^6$ main-chain carbon atoms, of -COOH, $-COOCH_3$, $-CH_2OH$, -COF, $-CF=CF_2$ and $-CONH_2$ of the present copolymer is preferably 40 or less, more preferably 30 or less, still more preferably 20 or less and especially preferably less than 15.

For identification of the kind of the functional groups and measurement of the number of the functional groups, infrared spectroscopy can be used.

The number of the functional groups is measured, specifically, by the following method. First, the fluorine-containing copolymer is molded by cold press to prepare a film of 0.25-0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the copolymer is calculated according to the following formula (A).

$$N = I \times K/t \cdots (A)$$

I: absorbance

K: correction factor

t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

**Table 1**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The number of -CF$_2$H groups can also be determined from a peak integrated value of the -CF$_2$H group acquired in a $^{19}$F-NMR measurement using a nuclear magnetic resonance spectrometer and set at a measurement temperature of (the melting point of a polymer + 20)°C.

Functional groups are functional groups present on the main chain terminals or side chain terminals of the fluorine-containing copolymer, and functional groups present on the main chain or the side chains thereof. The number of functional groups may be the total number of -CF=CF$_2$, -CF$_2$H, -COF, -COOH, -COOCH$_3$, - CONH$_2$ and -CH$_2$OH.

The functional groups are introduced to the fluorine-containing copolymer, for example, by a chain transfer agent or a polymerization initiator used in production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By carrying out a treatment such as a wet heat treatment or a fluorination treatment on the copolymer having such functional groups, there can be obtained the copolymer having the number of functional groups in the above range. The present copolymer is preferably one having been subjected to a wet heat treatment or a fluorination treatment, and more preferably one having been subjected to a fluorination treatment. It is also preferable that the present copolymer has a -CF$_3$

terminal group.

The melting point of the present copolymer is preferably 240-280°C and more preferably 251-264°C. Due to that the melting point is in the above range, the moldability of the copolymer is more improved, and formed articles better in abrasion resistance, low air permeation, 75°C high-temperature rigidity, 150°C tensile creep resistance and durability to repeated loads can be obtained.

Herein, the melting point can be measured by using a differential scanning calorimeter [DSC].

In the present copolymer, the haze value is preferably 10.0% or lower and more preferably 9.5% or lower. Due to that the haze value in the above range, in the case of obtaining formed articles such as piping, joints, flowmeter frames, bottles and nuts by using the present copolymer, the observation of formed article insides by e.g. visual observation or a camera becomes easy and the checking of the flow amount and the residual amount of contents becomes easy. The haze value can be lowered by regulating the contents of the HFP unit and the PPVE unit and the melt flow rate (MFR) of the present copolymer. Herein, the haze value can be measured according to JIS K7136.

The air permeation coefficient of the fluorine-containing copolymer is preferably 550 $cm^3 \cdot mm/(m^2 \cdot 24h \cdot atm)$ or lower and more preferably 520 $cm^3 \cdot mm/(m^2 \cdot 24h \cdot atm)$ or lower. Due to that the contents of the HFP unit and the PPVE unit of the fluorine-containing copolymer containing the TFE unit, the HFP unit and the PPVE unit and the melt flow rate are suitably regulated, the present copolymer has excellent low air permeation.

Herein, the air permeation coefficient can be measured under the condition of a test temperature of 70°C and a test humidity of 0%RH. The specific measurement of the air permeation coefficient can be carried out by a method described in Examples.

In the present copolymer, the amount of fluorine ions dissolving out therefrom detected by an immersion test in a hydrogen peroxide aqueous solution is, in terms of mass, preferably 4.0 ppm or lower, more preferably 3.0 ppm or lower and still more preferably 2.8 ppm or lower.

Herein, the immersion test in a hydrogen peroxide aqueous solution can be carried out by using the fluorine-containing copolymer and preparing a test piece having a weight corresponding to that of 10 sheets of a formed article (15 mm × 15 mm × 0.2 mm), and putting, in a thermostatic chamber of 95°C, a polypropylene-made bottle in which the test piece and 15 g of a 3-mass% hydrogen peroxide aqueous solution are put and allowing the resultant to stand for 20 hours.

The present copolymer can be produced by any polymerization method of e.g. bulk polymerization, suspension polymerization, solution polymerization, and emulsion polymerization. In these polymerization methods, conditions such as temperature and pressure, a polymerization initiator, a chain transfer agent, a solvent and other additives can suitably be set depending on the composition and the amount of a desired fluorine-containing copolymer.

The polymerization initiator may be an oil-soluble radical polymerization initiator or a water-soluble radical initiator.

An oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a well known water-soluble peroxide, and examples thereof include ammonium salts, potassium salts and sodium salts of persulfuric acid, perboric acid, perchloric acid, perphosphoric acid, and percarbonic acid, and t-butyl permaleate and t-butyl hydroperoxide. A reductant such as a sulfite salt may be combined with a peroxide and used, and the amount thereof to be used may be 0.1-20 times with respect to the peroxide.

Examples of the chain transfer agent include hydrocarbons such as ethane, isopentane, n-hexane and cyclohexane; aromatics such as toluene and xylene; ketones such as acetone; acetates such as ethyl acetate and butyl acetate; alcohols such as methanol, ethanol and 2,2,2-trifluoroethanol; mercaptans such as methyl mercaptan; halogenated hydrocarbons such as carbon tetrachloride, chloroform, methylene chloride and methyl chloride; and 3-fluorobenzotrifluoride. The amount thereof to be added can vary depending on the magnitude of the chain transfer constant of a compound to be used, but the chain transfer agent is used usually in the range of 0.01-20 parts by mass (pbm) with respect to 100 pbm of a solvent.

For example, in the cases of using a dialkyl peroxycarbonate or a di[fluoro(or fluorochloro)acyl] peroxide as a polymerization initiator, although there are some cases where the molecular weight of an obtained fluorine-containing copolymer becomes too high and the regulation of the melt flow rate to a desired one is not easy, the molecular weight can be regulated by using the chain transfer agent. It is especially suitable that the fluorine-containing copolymer is produced by suspension polymerization using the chain transfer agent such as an alcohol and the oil-soluble radical polymerization initiator.

The solvent includes water and mixed solvents of water and an alcohol. A monomer to be used for the polymerization of the present copolymer can also be used as the solvent.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of the suspensibility and the economic efficiency, preferably 10-100 pbm with respect to 100 pbm of the solvent.

The polymerization temperature is not limited, and may be 0-100°C. In the case where the decomposition rate of the polymerization initiator is too high, including cases of using e.g. a dialkyl peroxycarbonate or a di[fluoro(or fluorochloro) acyl] peroxide as the polymerization initiator, it is preferable to adopt a relatively low polymerization temperature such as in the temperature range of 0-35°C.

The polymerization pressure can suitably be determined according to other polymerization conditions such as the kind of the solvent to be used, the amount of the solvent, the vapor pressure and the polymerization temperature, but usually may be 0-9.8 MPaG. The polymerization pressure is preferably 0.1-5 MPaG, more preferably 0.5-2 MPaG and still more preferably 0.5-1.5 MPaG. When the polymerization pressure is 1.5 MPaG or higher, the production efficiency can be improved.

Examples of the additives in the polymerization include suspension stabilizers. The suspension stabilizers are not limited as long as being conventionally well-known ones, and e.g. methylcellulose and polyvinyl alcohols can be used. With the use of a suspension stabilizer, suspended particles produced by the polymerization reaction are dispersed stably in an aqueous medium, and therefore the suspended particles hardly adhere on the reaction vessel even when a SUS-made reaction vessel not having been subjected to adhesion preventing treatment such as glass lining is used. Accordingly, a reaction vessel withstanding a high pressure can be used, and therefore the polymerization under a high pressure becomes possible and the production efficiency can be improved. By contrast, in the case of carrying out the polymerization without using the suspension stabilizer, the suspended particles may adhere, and the production efficiency may be lowered with the use of a SUS-made reaction vessel not having been subjected to adhesion preventing treatment is used. The concentration of the suspension stabilizer in the aqueous medium can suitably be regulated depending on conditions.

In the case of obtaining an aqueous dispersion containing a fluoropolymer by a polymerization reaction, a dried fluoropolymer may be recovered by coagulating, cleaning and drying the copolymer contained in the aqueous dispersion. Alternatively, in the case of obtaining the copolymer as a slurry by a polymerization reaction, a dried fluoropolymer may be recovered by taking out the slurry from a reaction vessel, and cleaning and drying the slurry. The copolymer can be recovered in a powder form by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably 20-140°C higher than the melting point of the copolymer. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30-200°C, steam of 100-200°C or hot air of 40-200°C.

The fluorine-containing copolymer obtained by the polymerization may be heated in the presence of air and water at a temperature of 100°C or higher (wet heat treatment). Examples of the wet heat treatment include a method in which by using an extruder, the copolymer obtained by the polymerization is melted and extruded while air and water are fed. The wet heat treatment can convert thermally unstable functional groups of the copolymer, such as -COF and -COOH, to thermally relatively stable -$CF_2H$, whereby the total number of -COF and -COOH and the total number of -COOH, -$COOCH_3$, -$CH_2OH$, -COF, -CF=$CF_2$ and -$CONH_2$ of the copolymer can easily be regulated in the above-mentioned ranges. By heating the copolymer, in addition to air and water, in the presence of an alkali metal salt, the conversion reaction to -$CF_2H$ can be promoted. Depending on applications of the copolymer, however, it should be paid regard to that contamination by the alkali metal salt must be avoided.

The copolymer obtained by the polymerization may be subjected to a fluorination treatment. The fluorination treatment can be carried out by bringing the copolymer subjected to no fluorination treatment into contact with a fluorine-containing compound. The fluorination treatment can convert thermally unstable functional groups of the copolymer, such as -COOH, - $COOCH_3$, -$CH_2OH$, -COF, -CF=$CF_2$ and -$CONH_2$, and thermally relatively stable functional groups thereof, such as -$CF_2H$, to thermally very stable -$CF_3$. Resultantly, the total number of COOH, -$COOCH_3$, - $CH_2OH$, -COF, -CF=$CF_2$, -$CONH_2$ and -$CF_2H$ of the copolymer can easily be regulated in the above-mentioned ranges.

The fluorine-containing compound is not limited, but includes fluorine radical sources generating fluorine radicals under the fluorination treatment condition. The fluorine radical sources include $F_2$ gas, $CoF_3$, $AgF_2$, $UF_6$, $OF_2$, $N_2F_2$, $CF_3OF$, halogen fluorides (for example, $IF_5$ and $ClF_3$).

The fluorine radical source such as $F_2$ gas may be, for example, one having a concentration of 100%, but from the viewpoint of safety, the fluorine radical source is preferably mixed with an inert gas and diluted therewith to 5-50 mass%, and then used; and it is more preferably to be diluted to 15-30 mass%. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the fluorine-containing copolymer, preferably at 20-220°C and more preferably at 100-200°C. The fluorination treatment is carried out usually for 1-30 hours and preferably 5-25 hours. The fluorination treatment is preferred which brings the copolymer having been subjected to no fluorination treatment into contact with fluorine gas ($F_2$ gas).

A composition may be obtained by mixing the present copolymer and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

Then, the other components may be other polymers other than the present copolymer. The other polymers include fluororesins other than the present copolymer, fluoroelastomers and non-fluorinated polymers.

A method of producing the above composition includes a method in which the present copolymer and other components are dry mixed, and a method in which the present copolymer and other components are previously mixed by a mixer, and then, melt kneaded by e.g. a kneader or a melt extruder.

The present copolymer or the above-mentioned composition can be used, for example, as a processing aid or a forming material, but it is suitable to use that as a forming material. Then, aqueous dispersions, solutions and suspensions of the present copolymer, and the copolymer/solvent-based materials can also be utilized; and these can be used for application of coating materials, encapsulation, impregnation, and casting of films. However, since the present copolymer has the above-mentioned properties, it is preferable to use the copolymer as the forming material.

Formed articles may be obtained by forming the present copolymer or the above-mentioned composition.

A method of forming the present copolymer or the composition is not limited, and includes injection molding, extrusion forming, compression molding, blow molding, transfer molding, rotomolding and rotolining molding. As the forming method, among these, preferable are extrusion forming, compression molding and transfer molding; from the viewpoint of being able to produce forming articles in a high productivity, more preferable are extrusion forming and transfer molding, and still more preferable is extrusion forming. That is, it is preferable that formed articles are extrusion formed articles, compression molded articles, injection molded articles or transfer molded articles; and from the viewpoint of being able to produce molded articles in a high productivity, being extrusion formed articles or transfer molded articles is more preferable, and being extrusion formed articles is still more preferable. By forming the present copolymer by an extrusion forming method or a transfer molding method, beautiful formed articles can be obtained.

Formed articles containing the present copolymer may be, for example, nuts, bolts, joints, films, bottles, gaskets, electric wire coatings, tubes, hoses, pipes, valves, sheets, seals, packings, tanks, rollers, containers, cocks, connectors, filter housings, filter cages, flowmeters, pumps, wafer carriers, and wafer boxes.

The present copolymer, the above composition and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks; members for food and beverage transfer, such as tubes, hoses, belts, packings and joints for food and beverage, food packaging materials, and members for glass cooking appliances; members for waste liquid transport, such as tubes and hoses for waste transport;

members for high-temperature liquid transport, such as tubes and hoses for high-temperature liquid transport; members for steam piping, such as tubes and hoses for steam piping;

corrosion-proof tapes for piping, such as tapes wound on piping of decks of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for e.g. various kinds of roof materials and sidewalls;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines.

The above chemical stoppers and packaging films for chemicals have excellent chemical resistance to acids. The above chemical solution transfer members also include corrosion-proof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for e.g. vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, and illumination frames.

Since formed articles containing the present copolymer are excellent in abrasion resistance, low air permeation, 75°C high-temperature rigidity, 150°C tensile creep resistance and durability to repeated loads, the formed articles can suitably be utilized for e.g. nuts, bolts, joints, packings, valves, cocks, connectors, filter housings, filter cages, flowmeters, and pumps. Among these, the formed articles can suitably be utilized as piping members (particularly, valves and joints) to be used for transportation of chemical solutions and flowmeter frames having flow paths of chemical solutions in flowmeters. The present piping members and the flowmeter frames are excellent in abrasion resistance, low air permeation, 75°C high-temperature rigidity, 150°C tensile creep resistance and durability to repeated loads. Hence, the present piping members and the flowmeter frames are excellent in the visuality of the insides, and in particular, in the flowmeter frames, floats in the insides can easily be observed by e.g. visual observation or a camera, and the piping members and the flowmeter frames are hardly damaged even when stresses are repeatedly loaded according to the flow initiation, the flow suspension and the changes of flow amount of the chemical solutions.

Formed articles containing the present copolymer can suitably be utilized for members to be compressed such as gaskets and packings. The present member to be compressed may be a gasket or a packing.

The size and shape of the present members to be compressed may suitably be set according to applications, and are not limited. The shape of the present members to be compressed may be, for example, annular. The present members to be compressed may also have, in plan view, a circular shape, an elliptic shape, or a corner-rounded square, and may be a shape having a through-hole in the central portion thereof.

It is preferable that the present members to be compressed are used as members constituting non-aqueous electrolyte batteries. They are especially suitable as members to be used in a state of contacting with a non-aqueous electrolyte in non-aqueous electrolyte batteries. That is, they may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be, for example, $LiClO_4$ $LiAsF_6$, $LiPF_6$, $LiBF_4$, $LiCl$, $LiBr$, $CH_3SO_3Li$, $CF_3SO_3Li$, and cesium carbonate.

The present members to be compressed can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The present members to be compressed may also be members to be used for the purpose of both of sealing and insulation.

Since the present members to be compressed are excellent in abrasion resistance, low air permeation, 75°C high-temperature rigidity, 150°C tensile creep resistance and durability to repeated loads, they can suitably be utilized as sealing members for non-aqueous electrolyte batteries or insulating members for non-aqueous electrolyte batteries. Further, the present members to be compressed, due to containing the above fluorine-containing copolymer, have the excellent insulating property. Therefore, in the case of using the present members to be compressed as insulating members, the member firmly adhere to two or more electrically conductive members and prevent short circuit over a long term.

Since a very thick coating layer can be formed in a uniform thickness on a core wire having a very large diameter by an extrusion forming method by using the present copolymer, the fluorine-containing copolymer can suitably be utilized as a material for forming electric wire coatings. Coated electric wires having a coating layer containing the present copolymer exhibit almost no fluctuation in the outer diameter, and thus are excellent in electric properties.

The coated electric wire has a core wire, and the coating layer installed on the periphery of the core wire and containing the present copolymer. For example, an extrusion formed article made by melt extruding the present copolymer on a core wire can be made into the coating layer. The coated electric wires are suitable for LAN cables (Eathernet Cables), high-frequency transmission cables, flat cables and heat-resistant cables, and particularly, for transmission cables such as LAN cables (Eathernet Cables) and high-frequency transmission cables.

As a material for the core wire, for example, a metal conductor material such as copper or aluminum can be used. The core wire is preferably one having a diameter of 0.02-3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, there may be used, for example, AWG (American Wire Gauge)-46 (solid copper wire of 40 μm in diameter), AWG-26 (solid copper wire of 404 μm in diameter), AWG-24 (solid copper wire of 510 μm in diameter), and AWG-22 (solid copper wire of 635 μm in diameter).

The coating layer is preferably one having a thickness of 0.1-3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the present copolymer can suitably be utilized as the insulating coating layer containing the fluorine-containing copolymer. The thickness of each layer in the above structure is not limited, but is usually: the diameter of the inner conductor is approximately 0.1-3 mm; the thickness of the insulating coating layer is approximately 0.3-3 mm; the thickness of the outer conductor layer is approximately 0.5-10 mm; and the thickness of the protective coating layer is approximately 0.5-2 mm.

Alternatively, the coating layer may be one containing cells, and is preferably one in which cells are homogeneously distributed.

The average cell size of the cells is not limited, but is, for example, preferably 60 μm or smaller, more preferably 45 μm or smaller, still more preferably 35 μm or smaller, further still more preferably 30 μm or smaller, especially preferable 25 μm or smaller and further especially preferably 23 μm or smaller. Then, the average cell size is preferably 0.1 μm or larger

and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the present electric wire may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the fluorine-containing copolymer, extruding the fluorine-containing copolymer in a melt state on the core wire to thereby form the coating layer.

In formation of a coating layer, by heating the fluorine-containing copolymer and introducing a gas in the fluorine-containing copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated fluorine-containing copolymer, or may be generated by mingling a chemical foaming agent in the fluorine-containing copolymer. The gas dissolves in the fluorine-containing copolymer in a melt state.

Then, the present copolymer can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used, for example, in devices utilizing microwaves, particularly microwaves of 3-30 GHz, in satellite communication devices, and cell phone base stations.

In the products for high-frequency signal transmission, the present copolymer can suitably be used as insulators in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, and communication devices. As the (2) formed articles, antenna covers are preferable in that the dielectric loss is low.

Since the present copolymer can easily be formed into films uniform in thickness by an extrusion forming method, and further, the obtained formed articles are excellent in abrasion resistance, low air permeation, 75°C high-temperature rigidity, 150°C tensile creep resistance and durability to repeated loads, the fluorine-containing copolymer can suitably be utilized for films.

The films of the present invention are useful as release films. The release films can be produced by forming the present copolymer by e.g. melt extrusion, calendering, press molding, or casting. From the viewpoint that uniform thin films can be obtained, the release films can be produced by melt extrusion.

The present films can be applied to roll surfaces used in OA devices. Then, the present copolymer is formed into needed shapes by e.g. extrusion forming, compression molding, or press molding to be formed into sheet-shapes, filmy shapes or tubular shapes, and can be used as surface materials for e.g. OA device rolls or OA device belts. Thin-wall tubes and films can be produced particularly by a melt extrusion forming method.

Since beautiful tubes can be obtained by forming the fluorine-containing copolymer by extrusion forming by using the present copolymer, and further, the obtained formed articles are excellent in abrasion resistance, low air permeation, 75°C high-temperature rigidity, 150°C tensile creep resistance and durability to repeated loads, the fluorine-containing copolymer can suitably be utilized for tubes. Accordingly, the tubes containing the present copolymer can be produced at a high productivity, and have beautiful shapes and are excellent in abrasion resistance, low air permeation, 75°C high-temperature rigidity, 150°C tensile creep resistance and durability to repeated loads.

EXAMPLES

The embodiments of the present invention will be described by Examples as follows.

Each numerical value in Examples was measured by the following methods.

(Contents of monomer units)

The content of each monomer unit of the fluorine-containing copolymer was measured by an NMR analyzer (for example, manufactured by Bruker BioSpin GmbH, AVANCE 300, high-temperature probe), or an infrared absorption spectrometer (manufactured by PerkinElmer, Inc., Spectrum One).

(The number of -$CF_2H$)

The number of -$CF_2H$ groups of the fluorine-containing copolymer was determined from a peak integrated value of the -$CF_2H$ group acquired in a $^{19}$F-NMR measurement using a nuclear magnetic resonance spectrometer AVANCE-300 (manufactured by Bruker BioSpin GmbH) and set at a measurement temperature of (the melting point of the polymer + 20)°C.

(The numbers of -COOH, -$COOCH_3$, -$CH_2OH$, -COF, -$CF=CF_2$ and - $CONH_2$)

A dried powder or pellets obtained in each of Examples and Comparative Examples were molded by cold press to prepare a film of 0.25-0.3 mm in thickness. The film was 40 times scanned by a Fourier transform infrared spectrometer [FT-IR (Spectrum One, manufactured by PerkinElmer, Inc.)] and analyzed to obtain an infrared absorption spectrum. The obtained infrared absorption spectrum was compared with an infrared absorption spectrum of an already known film to determine the kinds of terminal groups. Further, from an absorption peak of a specific functional group emerging in a difference spectrum between the obtained infrared absorption spectrum and the infrared absorption spectrum of the already known film, the number N of the functional group per $1 \times 10^6$ carbon atoms in the sample was calculated according to the following formula (A).

$$N = I \times K/t \cdots (A)$$

I: absorbance

K: correction factor

t: thickness of film (mm)

Regarding the functional groups in Examples, for reference, the absorption frequency, the molar absorption coefficient and the correction factor are shown in Table 2. Further, the molar absorption coefficients are those determined from FT-IR measurement data of low molecular model compounds.

[Table 2]

**Table 2**

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -$COOCH_3$ | 1795 | 680 | 342 | $C_7F_{15}COOCH_3$ |
| -$CONH_2$ | 3436 | 506 | 460 | $C_7H_{15}CONH_2$ |
| -$CH_2OH_2$, -OH | 3648 | 104 | 2236 | $C_7H_{15}CH_2OH$ |
| -$CF=CF_2$ | 1795 | 635 | 366 | $CF_2=CF_2$ |

(Melt flow rate (MFR))

The MFR of the fluorine-containing copolymer was determined by using a Melt Indexer G-01 (manufactured by Toyo Seiki Seisaku-sho, Ltd.), and making the polymer to flow out from a die of 2 mm in inner diameter and 8 mm in length at 372°C under a load of 5 kg and measuring the mass (g/10 min) of the polymer flowing out per 10 min from the die, according to ASTM D1238.

(Melting point)

The fluorine-containing copolymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point of the fluorine-containing copolymer was determined from a melting curve peak observed in the second temperature raising step.

Example 1

40.25 kg of deionized water was fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 1.06 kg of PPVE were fed; and the autoclave was heated to 25.5°C. Then, TFE was fed until the internal pressure of the autoclave became 0.866 MPa; and then, 1.25 kg of a 8-mass% di($\omega$-hydroperfluorohexanoyl) peroxide solution (hereinafter, abbreviated to DHP) was fed in the autoclave to initiate polymerization. The internal pressure of the autoclave at the initiation of the polymerization was set at 0.866 MPa, and by continuously adding TFE, the set pressure was made to be held. After 2 hours and 4 hours from the polymerization initiation, 1.25 kg of DHP was additionally fed, and the internal pressure was lowered by 0.002 MPa, respectively; after 6 hours therefrom, 0.96 kg thereof was fed and the internal pressure was lowered by 0.002 MPa. Hereafter, 0.25 kg of DHP was fed at every 2 hours until the reaction finished, and at the every time, the internal pressure was lowered by 0.002 MPa.

Then, at each time point when the amount of TFE continuously additionally fed reached 8.1 kg, 16.2 kg and 24.3 kg, 0.24 kg of PPVE was additionally fed. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 45.3 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

Example 2

40.25 kg of deionized water and 0.012 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 0.93 kg of PPVE were fed; and the autoclave was heated to 25.5°C. Then, TFE was fed until the internal pressure of the autoclave became 0.855 MPa; and then, 1.25 kg of a 8-mass% di($\omega$-hydroperfluorohexanoyl) peroxide solution (hereinafter, abbreviated to DHP) was fed in the autoclave to initiate polymerization. The internal pressure of the autoclave at the initiation of the polymerization was set at 0.855 MPa, and by continuously adding TFE, the set pressure was made to be held. After 1.5 hours from the polymerization initiation, 0.012 kg of methanol was additionally fed. After 2 hours and 4 hours from the polymerization initiation, 1.25 kg of DHP was additionally fed, and the internal pressure was lowered by 0.002 MPa, respectively; after 6 hours therefrom, 0.96 kg thereof was fed and the internal pressure was lowered by 0.002 MPa. Hereafter, 0.25 kg of DHP was fed at every 2 hours until the reaction finished, and at the every time, the internal pressure was lowered by 0.002 MPa.

Then, at each time point when the amount of TFE continuously additionally fed reached 8.1 kg, 16.2 kg and 24.3 kg, 0.22 kg of PPVE was additionally fed. Then, at each time point when the amount of TFE additionally fed reached 6.0 kg and 18.1 kg, 0.012 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 45.4 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

Example 3

Copolymer pellets were obtained as in Example 2, except for changing the amount of methanol fed before the polymerization initiation to 0.020 kg, changing the each amount of methanol dividedly additionally fed after the polymerization initiation to 0.020 kg, changing the amount of PPVE fed before the polymerization initiation to 0.88 kg, changing the each amount of PPVE dividedly additionally fed after the polymerization initiation to 0.22 kg, and changing the each set pressure in the autoclave inside before and after the polymerization initiation to 0.843 MPa. By using the obtained pellets, the content of HFP and the content of PPVE were measured by the methods described above. The results are shown in Table 3.

The obtained pellets were deaerated at 200°C for 8 hours in an electric furnace, put in a vacuum vibration-type reactor VVD-30 (manufactured by Okawara Mfg. Co. Ltd.), and heated to 200°C. After vacuumizing, $F_2$ gas diluted to 20 vol.% with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 200°C for 8 hours. After the reaction was finished, the reactor interior was replaced sufficiently by $N_2$ gas to finish the fluorination reaction, thereby obtaining pellets. By using the obtained pellets, the above physical properties were measured by the methods described above. The results are shown in Table 3.

Example 4

Copolymer pellets were obtained as in Example 2, except for changing the amount of methanol fed before the polymerization initiation to 0.027 kg, changing the each amount of methanol dividedly additionally fed after the polymerization initiation to 0.027 kg, changing the amount of PPVE fed before the polymerization initiation to 0.61 kg, changing the each amount of PPVE dividedly additionally fed after the polymerization initiation to 0.17 kg, and changing the each set pressure in the autoclave inside before and after the polymerization initiation to 0.826 MPa. By using the obtained pellets, the content of HFP and the content of PPVE were measured by the methods described above. The results are shown in Table 3.

The obtained pellets were deaerated at 200°C for 72 hours in an electric furnace, thereafter put in a vacuum vibration-type reactor VVD-30 (manufactured by Okawara Mfg. Co. Ltd.), and heated to 110°C. After vacuumizing, an $F_2$ gas diluted to 20 vol.% with $N_2$ gas was introduced to the atmospheric pressure. After 0.5 hour from the $F_2$ gas introduction, vacuumizing was once carried out and the $F_2$ gas was again introduced. Further after 0.5 hour therefrom, vacuumizing was again carried out, and the $F_2$ gas was again introduced. Hereafter, the $F_2$ gas introduction and the vacuumizing operation were repeated once an hour while the reaction was carried out at a temperature of 110°C for 8 hours. After the finish of the reaction, the reactor inside was replaced sufficiently with $N_2$ gas to finish the fluorination reaction to thereby obtain pellets. By using the obtained pellets, the above physical properties were measured by the methods described above. The results are shown in Table 3.

Example 5

Copolymer pellets were obtained as in Example 2, except for changing the amount of methanol fed before the polymerization initiation to 0.102 kg, changing the each amount of methanol dividedly additionally fed after the polymerization initiation to 0.102 kg, changing the amount of PPVE fed before the polymerization initiation to 0.61 kg, changing the each amount of PPVE dividedly additionally fed after the polymerization initiation to 0.17 kg, and changing the each set pressure in the autoclave inside before and after the polymerization initiation to 0.823 MPa. By using the obtained pellets, the above physical properties were measured by the methods described above. The results are shown in Table 3.

Example 6

Copolymer pellets were obtained as in Example 2, except for changing the amount of methanol fed before the polymerization initiation to 0.012 kg, changing the each amount of methanol dividedly additionally fed after the polymerization initiation to 0.012 kg, changing the amount of PPVE fed before the polymerization initiation to 1.18 kg, changing the each amount of PPVE dividedly additionally fed after the polymerization initiation to 0.27 kg, and changing the each set pressure in the autoclave inside before and after the polymerization initiation to 0.872 MPa. By using the obtained pellets, the above physical properties were measured by the methods described above. The results are shown in Table 3.

Comparative Example 1

Copolymer pellets were obtained as in Example 2, except for changing the amount of methanol fed before the polymerization initiation to 0.276 kg, changing the each amount of methanol dividedly additionally fed after the polymerization initiation to 0.276 kg, changing the amount of PPVE fed before the polymerization initiation to 0.88 kg, changing the each amount of PPVE dividedly additionally fed after the polymerization initiation to 0.22 kg, and changing the each set pressure in the autoclave inside before and after the polymerization initiation to 0.843 MPa. By using the obtained pellets, the above physical properties were measured by the methods described above. The results are shown in Table 3.

Comparative Example 2

Copolymer pellets were obtained as in Example 2, except for changing the amount of methanol fed before the polymerization initiation to 0.257 kg, changing the each amount of methanol dividedly additionally fed after the polymerization initiation to 0.257 kg, changing the amount of PPVE fed before the polymerization initiation to 1.12 kg, changing the each amount of PPVE dividedly additionally fed after the polymerization initiation to 0.23 kg, and changing the each set pressure in the autoclave inside before and after the polymerization initiation to 0.892 MPa. By using the obtained pellets, the above physical properties were measured by the methods described above. The results are shown in Table 3.

Comparative Example 3

Copolymer pellets were obtained as in Example 2, except for changing the amount of methanol fed before the polymerization initiation to 0.112 kg, changing the each amount of methanol dividedly additionally fed after the polymerization initiation to 0.112 kg, changing the amount of PPVE fed before the polymerization initiation to 0.48 kg, changing the each amount of PPVE dividedly additionally fed after the polymerization initiation to 0.12 kg, and changing the each set pressure in the autoclave inside before and after the polymerization initiation to 0.843 MPa. By using the obtained pellets, the above physical properties were measured by the methods described above. The results are shown in Table 3.

Comparative Example 4

Copolymer pellets were obtained as in Example 2, except for changing the amount of methanol fed before the polymerization initiation to 0.014 kg, changing the each amount of methanol dividedly additionally fed after the polymerization initiation to 0.014 kg, changing the amount of PPVE fed before the polymerization initiation to 0.63 kg, changing the each amount of PPVE dividedly additionally fed after the polymerization initiation to 0.19 kg, and changing the each set pressure in the autoclave inside before and after the polymerization initiation to 0.911 MPa. By using the obtained pellets, the above physical properties were measured by the methods described above. The results are shown in Table 3.

Comparative Example 5

945 g of deionized water was fed in a 4 L-volume autoclave with a stirrer, and the autoclave inside was sufficiently vacuumized and replaced with nitrogen. Thereafter, the autoclave inside was vacuum deaerated, and in the autoclave put in a vacuum state, 945 g of HFP and 22.5 g of PPVE were fed; and the autoclave was heated to 32.0°C. Then, TFE was fed until the internal pressure of the autoclave became 0.984 MPa; and then, 5.1 g of an 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.962 MPa, and by continuously adding TFE, the set pressure was made to be held. After 2 hours and 4 hours from the polymerization initiation, 5.1 g of DHP was additionally fed, respectively, and after 6 hours therefrom, 4.0 g thereof was fed. Hereafter, 1.1 g of DHP was additionally fed at every 2 hours until the reaction finished.
When the amount of TFE continuously additionally fed reached 190 g, 6.2 g of PPVE was additionally fed. Then, when the amount of TFE additionally fed reached 380 g, the polymerization was made to finish. After the finish of the polymerization, unreacted TFE and HFP were discharged to thereby obtain a wet powder. Then, the wet powder was washed with pure water, and thereafter dried at 150°C for 10 hours and thereafter dried at 205°C for 24 hours to thereby obtain 435 g of a dry powder. By using the obtained powder, the HFP content and the PPVE content were measured by the methods described above. The results are shown in Table 3.

The obtained powder was put in a portable reactor TVS-1 type (manufactured by Taiatsu Techno Corporation), and heated to 200°C. After vacuumizing, an $F_2$ gas diluted to 20 vol.% with $N_2$ gas was introduced to the atmospheric pressure. After 0.5 hour from the $F_2$ gas introduction, vacuumizing was once carried out and the $F_2$ gas was again introduced. Further after 0.5 hour therefrom, vacuumizing was again carried out, and the $F_2$ gas was again introduced. Hereafter, the $F_2$ gas introduction and the vacuumizing operation were repeated once an hour while the reaction was carried out at a temperature of 200°C for 8 hours. After the finish of the reaction, the reactor inside was replaced sufficiently with $N_2$ gas to finish the fluorination reaction to thereby obtain a powder. By using the obtained powder, the above physical properties were measured by the methods described above. The results are shown in Table 3.

[Table 3]

Table 3

| | HFP content (% by mass) | PPVE content (% by mass) | Number of -CF$_2$H (number/C10$^6$) | Number of functional groups (number/C10$^6$) | MFR (g/10 min) | Melting point (°C) |
|---|---|---|---|---|---|---|
| Example 1 | 8.1 | 2.2 | 57 | 34 | 0.7 | 259 |
| Example 2 | 8.5 | 2.0 | 69 | 33 | 1.0 | 259 |
| Example 3 | 9.0 | 2.0 | <9 | <6 | 2.0 | 256 |
| Example 4 | 9.7 | 1.5 | 13 | <6 | 3.0 | 256 |
| Example 5 | 9.8 | 1.5 | 244 | 29 | 4.0 | 256 |
| Example 6 | 7.9 | 2.4 | 59 | 36 | 0.8 | 258 |
| Comparative Example 1 | 9.0 | 2.0 | 385 | 33 | 13.0 | 257 |
| Comparative Example 2 | 7.2 | 2.1 | 217 | 32 | 3.3 | 266 |
| Comparative Example 3 | 9.0 | 1.1 | 169 | 24 | 2.1 | 263 |
| Comparative Example 4 | 10.8 | 1.7 | 165 | 32 | 2.2 | 248 |
| Comparative Example 5 | 9.8 | 2.4 | <9 | <6 | 0.2 | 247 |

The description of "<9" in Table 3 means that the number of -CF$_2$H groups was less than 9. The description of "<6" in Table 3 means that the total number (number of functional groups, N) of -COOH, -COOCH$_3$, -CH$_2$OH, -COF, -CF=CF$_2$ and -CONH$_2$ was less than 6.

Then, by using the obtained pellets, the following properties were evaluated. The results are shown in Table 4.

(Haze value)

By using the pellets and a heat press molding machine, a sheet of approximately 1.0 mm in thickness was prepared. The haze value was measured according to JIS K7136 by using a haze meter (trade name: NDH7000SP, manufactured by Nippon Denshoku Industries Co. Ltd.) and dipping the sheet in a quartz cell having pure water put therein.

(Abrasion test)

By using the pellets and a heat press molding machine, a sheet-shape test piece of approximately 0.2 mm in thickness was prepared and cut out into a test piece of 10 cm × 10 cm. The prepared test piece was fixed on a test bench of a Taber abrasion tester (No. 101, Taber type abrasion tester with an option, manufactured by Yasuda Seiki Seisakusho, Ltd.), and the abrasion test was carried out under the conditions of at a temperature of 25°C, at a load of 500 g, using an abrasion wheel CS-10 (rotationally polished in 20 rotations with an abrasion paper #240), and at a rotation rate of 60 rpm, using the Taber abrasion tester. The weight of the test piece after 1,000 rotations was measured, and the same test piece was further subjected to the test of 10,000 rotations and thereafter, the weight thereof was measured. The abrasion loss was determined by the following formula.

$$\text{Abrasion loss (mg)} = \text{M1} - \text{M2}$$

M1: the weight of the test piece after the 1,000 rotations (mg)
M2: the weight of the test piece after the 10,000 rotations (mg)

(Air permeation coefficient)

By using the pellets and a heat press molding machine, a sheet-shape test piece of approximately 0.1 mm in thickness was prepared. Measurement of the air permeability was carried out on the obtained test piece according to a method described in JIS K7126-1:2006 by using a differential pressure type permeability tester (L100-5000 type gas permeability tester, manufactured by Systech illinois Ltd.). There was obtained a numerical value of the air permeability at a permeation area of 50.24 $cm^2$, a test temperature of 70°C and at a test humidity of 0%RH. By using the obtained air permeability and the thickness of the test piece, the air permeability coefficient was calculated by the following formula.

$$\text{Air permeability coefficient } (cm^3 \cdot mm/(m^2 \cdot 24h \cdot atm)) = \text{GTR} \times \text{d}$$

GTR: air permeability ($cm^3/(m^2 \cdot 24h \cdot atm)$ )
d: test piece thickness (mm)

(75°C load deflection rate)

By using the pellets and a heat press molding machine, a sheet-shape test piece of approximately 2.4 mm in thickness was prepared and cut out into a test piece of 80 × 10 mm; and the test piece was heated in an electric furnace at 100°C for 20 hours. A test for the 75°C load deflection rate was carried out according to a method described in JIS K7191-1 except for using the obtained test piece, by a heat distortion tester (manufactured by Yasuda Seiki Seisakusho, Ltd.) under the conditions of at a test temperature of 30-150°C, at a temperature-increasing rate of 120°C/h, at a bending stress of 1.8 MPa and the flatwise method. The load deflection rate was determined by the following formula. A sheet low in the 75°C load deflection rate is excellent in 75°C high-temperature rigidity.

$$\text{Load deflection rate (\%)} = \text{a2/a1} \times 100$$

a1: a thickness of the test piece before the test (mm)
a2: an amount deflected at 75°C (mm)

(Tensile creep test)

The tensile creep strain was measured by using TMA-7100, manufactured by Hitachi High-Tech Science Corp. By using the pellets and a heat press molding machine, a sheet of approximately 0.1 mm in thickness was prepared, and a sample of 2 mm in width and 22 mm in length was prepared from the sheet. The sample was mounted on measurement jigs with the distance between the jigs of 10 mm. A load was applied on the sample so that the cross-sectional load became 2.93 $N/mm^2$, and allowed to stand at 150°C; and there was measured the displacement (mm) from the timepoint of 90 min from the test initiation to the timepoint of 300 min from the test initiation, and there was calculated the proportion (tensile creep strain (%)) of the displacement (mm) to the initial sample length (10 mm). A sheet low in the tensile creep stain (%) measured under the condition of at 150°C for 300 min is hardly elongated even when a tensile load is applied for a long time in a high-temperature environment, being excellent in the high-temperature tensile creep property (150°C).

(Tensile strength after 30,000 cycles)

The tensile strength after 30,000 cycles was measured by using a fatigue testing machine MMT-250NV-10, manufactured by Shimadzu Corp. By using the pellets and a heat press molding machine, a sheet of approximately 2.4 mm in thickness was prepared, and a sample in a dumbbell shape (thickness: 2.4 mm, width: 5.0 mm, measuring section length: 22 mm) was prepared by using an ASTM D1708 microdumbbell. The sample was mounted on measuring jigs and the measuring jigs were installed in a state of the sample being mounted in a thermostatic chamber at 110°C. The tensile operation in the uniaxial direction was repeated at a stroke of 0.2 mm and at a frequency of 100 Hz, and there was measured the tensile strength at every tensile operation (tensile strength at the time the stroke was +0.2 mm, unit: N).
A sheet high in the tensile strength after 30,000 cycles retains the high tensile strength even after loading is repeated 30,000 times, being excellent in the durability (110°C) to repeated loads.

(Electric wire coating extrusion conditions)

By using a 30-mmϕ electric wire coating extruder (manufactured by Tanabe Plastics Machinery Co. Ltd.), the fluorine-containing copolymer was extrusion coated in the following coating thickness on a copper conductor of 1.00 mm in conductor diameter to thereby obtain a coated electric wire. The electric wire coating extrusion conditions were as follows.

a) Core conductor: conductor diameter: 1.00 mm
b) Coating thickness: 0.70 mm
c) Coated electric wire diameter: 2.40 mm
d) Electric wire take-over speed: 3 m/min
e) Extrusion condition:

· Cylinder screw diameter = 30 mm, a single-screw extruder of L/D = 22

· Die (inner diameter)/tip (outer diameter) = 24.0 mm/10.0 mm Set temperature of the extruder: barrel section C-1 (340°C), barrel section C-2 (375°C), barrel section C-3 (390°C), head section H (400°C), die section D-1 (400°C), die section D-2 (400°C), Set temperature for preheating core wire: 80°C

(Fluctuation in the outer diameter)

By using an outer diameter measuring device (ODAC18XY, manufactured by Zumbach Electronic AG), the outer diameter of the obtained coated electric wire was measured continuously for 1 hour. A fluctuation value of the outer diameter was determined by rounding, to two decimal places, an outer diameter value most separated from the predetermined outer diameter value (2.40 mm) among measured outer diameter values. The proportion (fluctuation rate of the outer diameter) of the absolute value of a difference between the predetermined outer diameter and the fluctuation value of the outer diameter to the predetermined outer diameter (2.40 mm) was calculated and evaluated according to the following criteria.

Fluctuation rate of the outer diameter (%) = |(the fluctuation value of the outer diameter) - (the predetermined outer diameter)|/(the predetermined outer diameter) × 100

±1%: the fluctuation rate of the outer diameter was 1% or lower.
±2%: the fluctuation rate of the outer diameter was higher than 1% and 2% or lower.
Poor: the fluctuation rate of the outer diameter was higher than 2%.

(Tube moldability)

By using a ϕ30-mm extruder (manufactured by Tanabe Plastics Machinery Co. Ltd.), the pellets were extruded to obtain a tube of 10.0 mm in outer diameter and 1.0 mm in wall thickness. The extrusion conditions were as follows.

a) Die inner diameter: 25 mm
b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition:

· Cylinder screw diameter = 30 mm, a single-screw extruder of L/D = 22

Set temperature of the extruder: barrel section C-1 (350°C), barrel section C-2 (370°C), barrel section C-3 (380°C), head section H-1 (390°C), die section D-1 (390°C), die section D-2 (390°C)
The obtained tube was observed and evaluated according to the following criteria. The appearance of the tube was visually observed.

Good: The appearance was good.
Poor: The cross-section did not become circular and the appearance was poor, including that flattening occurred and uneven wall thickness emerged.

(Film moldability)

By using a $\phi$14-mm extruder (manufactured by Imoto Machinery Co. Ltd.) and a T die, the pellets were formed to prepare a film. The extrusion conditions were as follows.

a) Take-up speed: 0.4 m/min
b) Roll temperature: 120°C
c) Film width: 70 mm
d) Thickness: 0.25 mm
e) Extrusion condition:

· Cylinder screw diameter = 14 mm, a single-screw extruder of L/D = 20

Set temperature of the extruder: barrel section C-1 (330°C), barrel section C-2 (350°C), barrel section C-3 (365°C), T die section (370°C)

The extrusion forming of the fluorine-containing copolymer was continued until the fluorine-containing copolymer became enabled to be stably extruded from the extruder. Successively, by extruding the fluorine-containing copolymer, a film (70 mm wide) of 5 m or longer in length was prepared so that that thickness became 0.25 mm. A portion of 4-5 m of the obtained film was cut out from one end of the film and there was prepared a test piece (1 m long and 70 mm wide) for measuring the fluctuation in the thickness. Then, there were measured thicknesses of 3 points in total on one end of the obtained film of a middle point in the width direction and 2 points separated by 25 mm from the middle point in the width direction. Further, there were measured 9 points in total of 3 middle points in the width direction spaced at intervals of 25 cm from the middle point in the width direction of the one end of the film toward the other end thereof, and 2 points separated by 25 mm in the width direction from the each middle point of the 3 middle points. Among the 12 measurement values in total, the case where the number of points having measurement values out of the range of ±10% of 0.25 mm was 1 or less was taken as good; and the case where the number of points having measurement values out of the range of ±10% of 0.25 mm was 2 or more was taken as poor.

(Immersion test in a hydrogen peroxide aqueous solution)

By using the pellets and a heat press molding machine, a sheet of approximately 0.2 mm in thickness was prepared and test pieces of 15 mm square were prepared. 10 sheets of the test pieces and 15 g of a 3-mass% hydrogen peroxide aqueous solution were put in a 50-mL polypropylene-made bottle, and heated in an electric furnace at 95°C for 20 hours, and thereafter cooled to room temperature. The test pieces were removed from the hydrogen peroxide aqueous solution; and a TISAB solution (10) (manufactured by Kanto Chemical Co., Inc.) was added to the remaining hydrogen peroxide aqueous solution; and the fluorine ion concentration in the obtained hydrogen peroxide aqueous solution was measured by a fluorine ion meter. The fluorine ion concentration (concentration of fluorine ions having dissolved out) per sheet weight was calculated from an obtained measurement value according to the following formula.

Dissolving-out fluorine ion concentration (ppm by mass) = the measurement value (ppm) $\times$ the amount of the hydrogen peroxide aqueous solution (g) / the weight of the test piece (g)

[Table 4]

**Table 4**

| | Haze value (%) | 25°C Abrasion loss (mg) | Air permeation coefficient (cm³·mm/(m²·24h·atm)) | 75°C Load deflection rate (%) | 150°C Tensile creep strain (%) | Tensile strength after 30,000 cycles (N) | Electric wire coating test | Tube moldability | Film moldability | Hydrogen peroxide aqueous solution immersion test (ppm by mass) |
|---|---|---|---|---|---|---|---|---|---|---|
| | | | | | | | Fluctuation in outer diameter | | | |
| Example 1 | 8.9 | 10.4 | 518 | 67% | 0.25 | 9.16 | ±2% | good | good | 3.0 |
| Example 2 | 8.7 | 11.2 | 494 | 65% | 0.38 | 8.56 | ±2% | good | good | 3.1 |
| Example 3 | 8.9 | 12.0 | 472 | 67% | 0.75 | 7.69 | ±2% | good | good | 2.5 |
| Example 4 | 8.8 | 12.8 | 440 | 62% | 1.09 | 6.75 | ±1% | good | good | 2.6 |
| Example 5 | 9.2 | 13.7 | 410 | 62% | 1.29 | 6.52 | ±1% | good | good | 4.7 |
| Example 6 | 9.2 | 10.2 | 516 | 68% | 0.28 | 9.33 | ±2% | good | good | 3.0 |
| Comparative Example 1 | 13.1 | 19.2 | 361 | 60% | 1.47 | 6.91 | poor | poor | poor | 6.0 |
| Comparative Example 2 | 14.8 | 14.7 | 434 | 51% | 0.42 | 9.56 | ±1% | good | good | 4.5 |
| Comparative Example 3 | 10.3 | 14.8 | 434 | 50% | 0.60 | 7.74 | ±2% | good | good | 4.0 |
| Comparative Example 4 | 4.8 | 11.5 | 447 | 80% | 1.62 | 5.59 | ±2% | good | good | 4.0 |
| Comparative Example 5 | 3.0 | 6.6 | 613 | 95% | 0.23 | 7.70 | - | - | - | 2.5 |

## Claims

1. A copolymer, which is a fluorine-containing copolymer comprising tetrafluoroethylene (TFE) units and, based on the total of monomer units, 7.6-10.3 mass% of hexafluoropropylene (HFP) units and 1.3-2.9 mass% of perfluoro(propyl vinyl ether) (PPVE) units, and which has a melt flow rate at 372°C of 0.7-4.5 g/10, determined according to the method defined in the description.

2. The copolymer of claim 1, which contains, based on the total of monomer units, 7.9-9.8 mass% of HFP units.

3. The copolymer of claim 1 or 2, which contains, based on the total of monomer units, 1.5-2.4 mass% of PPVE units.

4. The copolymer of any of claims 1-3, which has a melt flow rate at 372°C of 0.7-4.0 g/10 min.

5. The copolymer of any of claims 1-4, which has a total number of -CF=CF$_2$, -CF$_2$H, -COF, -COOH, -COOCH$_3$, CONH$_2$ and -CH$_2$OH groups of $\leq$ 50 per 10$^6$ main-chain carbon atoms, determined according to the method defined in the description.

6. An extrusion formed article, comprising the copolymer of any of claims 1-5.

7. A transfer molded article, comprising the copolymer of any of claims 1-5.

8. A coated electric wire, comprising a coating layer comprising the copolymer of any of claims 1-5.

9. A formed article, which comprises the copolymer of any of claims 1-5 and is a tube, a film or an electric wire coating.


## Patentansprüche

1. Copolymer, das ein fluorhaltiges Copolymer ist, umfassend Tetrafluorethylen (TFE)-Einheiten und, bezogen auf die Gesamtmenge der Monomereinheiten, 7,6-10,3 Massen-% Hexafluorpropylen (HFP)-Einheiten und 1,3-2,9 Massen-% Perfluor(Propylvinylether) (PPVE)-Einheiten, und das eine Schmelzflussrate bei 372 °C von 0,7 bis 4,5 g/10 min aufweist, bestimmt gemäß dem in der Beschreibung definierten Verfahren.

2. Copolymer gemäß Anspruch 1, das, bezogen auf die Gesamtmenge der Monomereinheiten, 7,9-9,8 Massen-% HFP-Einheiten enthält.

3. Copolymer gemäß Anspruch 1 oder 2, das, bezogen auf die Gesamtmenge der Monomereinheiten, 1,5-2,4 Massen-% PPVE-Einheiten enthält.

4. Copolymer gemäß mindestens einem der Ansprüche 1-3, das eine Schmelzflussrate bei 372 °C von 0,7-4,0 g/10 min aufweist.

5. Copolymer gemäß mindestens einem der Ansprüche 1-4, das eine Gesamtzahl von -CF=CF$_2$-, -CF$_2$H-, -COF-, -COOH-, -COOCH$_3$-, CONH$_2$- und -CH$_2$OH-Gruppen von $\leq$ 50 pro 10$^6$ Kohlenstoffatomen der Hauptkette aufweist, bestimmt gemäß dem in der Beschreibung definierten Verfahren.

6. Extrusionsgeformter Gegenstand, umfassend das Copolymer gemäß mindestens einem der Ansprüche 1-5.

7. Transfergeformter Gegenstand, umfassend das Copolymer gemäß mindestens einem der Ansprüche 1-5.

8. Beschichteter elektrischer Draht, umfassend eine Beschichtungsschicht, die das Copolymer gemäß mindestens einem der Ansprüche 1-5 umfasst.

9. Formgegenstand, der das Copolymer gemäß mindestens einem der Ansprüche 1-5 umfasst und ein Rohr, eine Folie oder eine elektrische Drahtbeschichtung ist.

**Revendications**

1. Copolymère, qui est un copolymère fluoré comprenant des unités de tétrafluoroéthylène (TFE) et, sur la base du total d'unités monomères, de 7,6 à 10,3 % en masse d'unités d'hexafluoropropylène (HFP) et de 1,3 à 2,9 % en masse d'unités de perfluoro(propylvinyléther) (PPVE), et qui présente un indice de fluidité à chaud à 372 °C compris de 0,7 à 4,5 g/10 min, déterminé selon la méthode définie dans la description.

2. Copolymère selon la revendication 1, qui contient, sur la base du total d'unités monomères, de 7,9 à 9,8 % en masse d'unités HFP.

3. Copolymère selon la revendication 1 ou la revendication 2, qui contient, sur la base du total d'unités monomères, de 1,5 à 2,4 % en masse d'unités PPVE.

4. Copolymère selon l'une quelconque des revendications 1 à 3, qui présente un indice de fluidité à chaud à 372 °C compris de 0,7 à 4,0 g/10 min.

5. Copolymère selon l'une quelconque des revendications 1 à 4, qui présente un nombre total de groupes -CF=CF$_2$, -CF$_2$H, -COF, -COOH, -COOCH$_3$, -CONH$_2$ et -CH$_2$OH de $\leq 50$ par $10^6$ atomes de carbone de la chaîne principale, déterminé selon la méthode définie dans la description.

6. Article formé par extrusion, comprenant le copolymère selon l'une quelconque des revendications 1 à 5.

7. Article moulé par transfert, comprenant le copolymère selon l'une quelconque des revendications 1 à 5.

8. Fil électrique revêtu, comprenant une couche de revêtement comprenant le copolymère selon l'une quelconque des revendications 1 à 5.

9. Article formé, qui comprend le copolymère selon l'une quelconque des revendications 1 à 5 et est un tube, un film ou un revêtement de fil électrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 52109588 A
- EP 1260526 A
- WO 2019008998 A
- JP 2015054431 A